# EUROPEAN PATENT APPLICATION

(11) **EP 4 737 536 A1**
(43) Date of publication of application: **06.05.2026**
(21) Application number: 24864980.8
(22) Date of filing: 25.04.2024
(51) Int. Cl.: C10B 57/04, C10B 53/02

(54) **COKE PRODUCTION METHOD**

(30) Priority: 13.09.2023 JP 2023148706
(71) Applicant: JFE Steel Corporation, Tokyo, 100-0011 (JP)
(72) Inventor: KAWAI, Yuya, Tokyo 100-0011 (JP); TAKASHIMA, Takanori, Tokyo 100-0011 (JP); DOHI, Yusuke, Tokyo 100-0011 (JP); YAMAMOTO, Tetsuya, Tokyo 100-0011 (JP); MATSUI, Takashi, Tokyo 100-0011 (JP)
(74) Representative: Hoffmann Eitle
(86) International application number: PCT/JP2024/016347
(87) International publication number: WO 2025/057471

(57) **Abstract**

Provided is a new index for biomass-derived raw material that can replace a portion of coal used in the production of coke for blast furnaces, and a means for producing high-strength coke even when biomass-derived raw material is blended with coal. Biomass having a micro-strength index (MSI_{0.21}) of 45 or more in coke for testing obtained by dry-distilling the biomass alone is blended with a coal blend to produce coke.

## Description

### TECHNICAL FIELD

The present disclosure relates to a method of producing coke using biomass as a portion of raw material.

### BACKGROUND

Coke is a mainly carbon agglomerate product obtained by dry-distilling coal. Blast furnace coke used in a blast furnace functions as a heat source and a reducing agent, and also as a support material that secures gas permeability and liquid permeability inside the blast furnace. Therefore, in order to secure stable operation of the blast furnace, the agglomerate coke is required to have sufficient mechanical strength.

In the production of blast furnace coke, a coal blend in which multiple types of coal are blended in a defined proportion is used. The coal blend is dry-distilled at a temperature of 1000 °C or higher either as is or after being molded, to obtain agglomerated coke in which coal particles are bonded together. By using a type of coal called caking coal, which has a property of easily softening and melting, as a portion of the coal blend, it is possible to obtain coke that has high strength.

Two types of measured values of coal have conventionally been used as indices for managing coke strength. One is an average maximum reflectance of vitrinite (hereinafter referred to as "Ro") as specified in Japanese Industrial Standard M 8816:1992 "Solid mineral fuels - Methods of microscopical measurement for the macerals and reflectance". The higher the Ro value of coal, the higher the degree of carbonization and the stronger the coke matrix tends to be. The other is maximum fluidity according to a Gieseler plastometer (hereinafter referred to as "MF"), as specified in Japanese Industrial Standard M 8801:2004 "Coal-testing methods". The higher the MF value of coal, the more the coal tends to soften, melt, and flow when heated.

In recent years, societal efforts to mitigate the impact of global warming by decreasing carbon dioxide emissions into the atmosphere, one of the greenhouse gases, have been accelerating. For this reason, studies are underway to replace a portion of the coal used to make coke with carbon-neutral raw material such as biomass. For example, in Patent Literature (PTL) 1, a method of producing coke is described in which woody biomass material that has been heat-treated at a temperature higher than 300 °C and 400 °C or less is mixed with coal and dry-distilled in a coke oven. Further, in PTL 2, a method of producing highly reactive blast furnace coke is described, in which biomass is heated to 1000 °C or higher to pyrolyze the biomass, and the resulting solid biomass char having a diameter of 1 mm or less is added to a coal blend.

### CITATION LIST

### Patent Literature

PTL 1: JP 2005-272569 A
PTL 2: JP 2014-077086 A

### SUMMARY

### (Technical Problem)

When attempting to replace a portion of the coal used to make coke with a biomass-derived raw material, even a small substitution ratio can significantly decrease the strength of the resulting coke.

Conventionally, Ro and MF, which are effective indices for managing the strength of coke, are both indices for measurement of coal. Therefore, when attempting to measure Ro and MF for a sample consisting only of biomass-derived raw material, the properties of coal and biomass are significantly different, and therefore it is either impossible to carry out the measurements, or even if the measurements could be carried out, the measured values could not be used as indices for managing the strength of such coke. Therefore, a new index for managing the strength of coke is required.

In view of the problems described above, it would be helpful to provide a new index for biomass-derived raw material that can replace a portion of the coal used in producing coke for blast furnaces, and to provide a means of producing high-strength coke even when biomass-derived raw material is blended with coal.

### (Solution to Problem)

In order to clarify the cause of the decrease in strength of coke that uses biomass as a portion of the raw material, the inventors of the present patent application conducted detailed observations of defects present inside agglomerate coke having decreased strength. As a result of the observations, it was found that in coke containing biomass-derived raw material, the biomass-derived portion has low strength and is easily broken when stress is applied from the surrounding area. That is, it was estimated that the strength of the coke as a whole was decreased because the biomass-derived portion became an initiation point of breakage.

Further, the inventors investigated a micro-strength index, an index of microscopic strength, of raw material derived from various types of biomass, and discovered that the micro-strength index varies greatly depending on the type of biomass used as raw material. The inventors then discovered that by using the micro-strength index of biomass as a new index and selectively using biomass suitable for blending with a coal blend, it is possible to suppress a decrease in coke strength, and arrived at the present disclosure.

The primary features of the present disclosure are as follows.
[1] A method of producing coke, the method comprising:
   blending biomass in a defined proportion with a coal blend for coke production to form a mixture, and dry-distilling the mixture to produce coke, wherein
   a micro-strength index of coke for testing obtained by dry-distilling the biomass alone is 45 or more.
[2] The method of producing coke according to [1], above, wherein the micro-strength index is 60 or more.
[3] The method of producing coke according to [1] or [2], above, wherein a temperature at which the coke for testing is dry-distilled is 1000 °C.
[4] The method of producing coke according to any one of [1] to [3], above, wherein volatile content of the biomass on a dry basis is 6.0 mass% or more.
[5] The method of producing coke according to any one of [1] to [4], above, wherein the biomass includes at least one of palm kernel shells or woody biomass.
[6] The method of producing coke according to any one of [1] to [5], above, wherein the biomass is carbonized biomass obtained by heat-treating unheated biomass.
[7] The method of producing coke according to any one of [1] to [6], above, wherein a proportion of the biomass in the mixture is 1.0 mass% or more and 10 mass% or less.
[8] The method of producing coke according to any one of [1] to [7], above, wherein a proportion of the biomass having a particle size of 3.0 mm or less in the biomass is 70 mass% or more, and a proportion of the coal blend having a particle size of 3.0 mm or less in the coal blend is 70 mass% or more.

### (Advantageous Effect)

According to the present disclosure, a property of biomass-derived raw material suitable for replacing a portion of the coal used in the production of coke for use in a blast furnace is revealed. This makes it possible to produce high-strength coke even when biomass-derived raw material is blended with coal. Further, carbon dioxide emissions derived from fossil fuel can be decreased.

### BRIEF DESCRIPTION OF THE DRAWINGS

In the accompanying drawings:

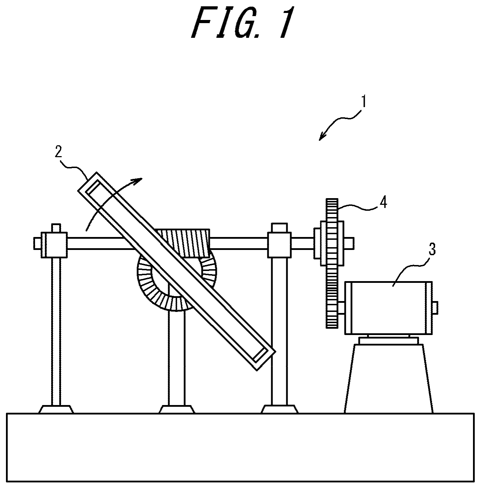

FIG. 1 is a schematic diagram illustrating an example of a test device for applying mechanical impacts.

### DETAILED DESCRIPTION

Embodiments of the present disclosure are described in detail below.

According to an embodiment, a method of producing coke according to the present disclosure includes blending biomass in a defined proportion with a coal blend for coke production to form a mixture, and dry-distilling the mixture to produce coke, wherein a micro-strength index of coke for testing obtained by dry-distilling the biomass alone is 45 or more.

### [Biomass]

According to the present embodiment, "biomass" refers to organic industrial resources derived from plants and animals that exist in the current ecosystem. Organic matter that makes up biomass circulates within the ecosystem, changing form. Carbon dioxide produced when biomass is burned originates from carbon absorbed by living organisms as the plants and animals grow, and therefore does not affect the total amount of carbon dioxide in the atmosphere and is considered to be in a so-called carbon-neutral state. In contrast, carbon dioxide produced when fossil fuels are burned originates from underground resources isolated from the current ecosystem, and is therefore not considered to be in a carbon-neutral state. Accordingly, fossil fuels such as coal and petroleum are not included in the biomass according to the present embodiment.

The biomass used according to the present embodiment may be any type of biomass that can be used as an industrial resource, including products produced in fields such as agriculture, forestry, livestock farming, and fisheries, as well as waste generated during the production process, and that satisfies the defined conditions described below. According to a preferred embodiment, the biomass includes at least one of palm kernel shells or woody biomass. Palm kernel shells are biomass produced as a by-product after palm oil is extracted from palm kernels. Palm kernel shells are inexpensive and have adequate strength, and are therefore suitable as the biomass used according to the present embodiment. Examples of woody biomass include biomass made from wood of conifers such as Japanese cedar, pine, and Japanese cypress, and broad-leaved trees such as zelkova, birch, and eucalyptus. The part of the wood is not limited. Woody biomass includes waste wood from construction and papermaking, as well as unused parts such as thinned wood from forestry. Sawdust produced during lumber production is one representative example of woody biomass.

The proportion of the biomass having a particle size of 3.0 mm or less is preferably 70 mass% or more and 100 mass% or less. When the proportion having a particle size of 3.0 mm or less is 70 mass% or more and 100 mass% or less, the particles can be homogeneously mixed with the coal blend. The proportion having a particle size 3.0 mm or less is more preferably 100 mass%. There is no lower limit on the particle size. That is, the particle size may be greater than 0 (zero).

When the proportion of the biomass having a particle size of 3.0 mm or less is less than 70 mass%, the biomass can be ground to adjust the proportion of the biomass having a particle size of 3.0 mm or less to 70 mass% or more and 100 mass% or less. The particle size adjustment by grinding may be carried out on the biomass, on the carbonized biomass described below, or on both. A known grinder can be used to grind the biomass or the carbonized biomass.

Hereinafter, the term "particle size" corresponds to the nominal aperture size of the test sieve specified in Japanese Industrial Standard Z 8801-1:2019 "Test sieves - Part 1: Test sieves of metal wire cloth". That is, granular material having a particle size larger than X mm is granular material that remains on a sieve when sieved using a sieve having a nominal aperture size of X mm. Granular material having a particle size of Y mm or less is granular material that falls below the sieve when sieved using a sieve having a nominal aperture size of Y mm.

When producing large amounts of biomass on an industrial scale, yield can be increased and production costs can be decreased by omitting the processes of sorting by sieving or adjusting particle size by grinding, or both. In such a case, it is preferable that the proportion of the biomass having a particle size of 3.0 mm or less in a particle size distribution of the biomass based on mass is 70 mass% or more. When particle size adjustment is not carried out, the proportion of the biomass having a particle size of 3.0 mm or less is more preferably 80 mass% or more. The proportion is even more preferably 90 mass% or more. The upper limit of the proportion of the biomass having a particle size of 3.0 mm or less is 100 mass%. The particle size distribution of the biomass based on mass can be determined by a known method from a sample taken from a large amount of produced biomass, such as measuring the weight of granular material sieved using multiple sieves with different aperture sizes, irradiating a sample with a laser, or the like.

It is not essential to heat-treat and carbonize the biomass before grinding, but according to a preferred embodiment, the grindability of the biomass can be improved by heat-treating unheated biomass to obtain carbonized biomass.

In the heat treatment for carbonizing biomass, the biomass is heat-treated in an atmosphere from which air is excluded. By carrying out the heat treatment of the biomass in an atmosphere from which air is excluded, the progress of combustion of the biomass is hindered, and the biomass can be carbonized. To achieve an atmosphere from which air is excluded, for example, a container is prepared that forms a space in which inflow of air is inhibited and an inert gas is allowed to flow, and the biomass is placed inside the container and subjected to heat treatment.

The temperature at which the biomass is heat-treated may be adjusted appropriately depending on the type of the biomass so that the grindability and volatile content fall within a suitable range. For example, when using palm kernel shells as the biomass, palm kernel shells may be used as they are without heat treatment, but heat treatment at 400 °C or higher promotes carbonization and improves grindability and is therefore more preferable. On the other hand, when the temperature for the heat treatment is 700 °C or lower, the volatile content described below falls within a suitable range, and is therefore preferable. The temperature is more preferably 600 °C or lower. The temperature at which the biomass is heat-treated is preferably higher from the viewpoint of the progress of carbonization, and is preferably lower from the viewpoint of volatile content. Hereinafter, "heat treatment temperature" refers to a maximum arrival temperature of the biomass when subjected to heat treatment.

The time for which the heat treatment is carried out varies depending on the type of the biomass and the mass of the biomass to be heat-treated at one time, but is preferably 1 min or longer. The heat treatment time is preferably 60 min or shorter. The heat treatment time is more preferably 10 min or longer. The heat treatment time is more preferably 30 min or shorter. Hereinafter, "heat treatment time" refers to a time from when the temperature of the biomass reaches the temperature at which the heat treatment is carried out until the heat treatment temperature is no longer maintained.

### [Blend]

In the method of producing coke according to the present embodiment, a mixture obtained by blending biomass with a coal blend for coke production at a defined proportion is dry-distilled to produce coke. The biomass to be blended into the coal blend may be unheated biomass and may be carbonized biomass obtained by heat treatment. The coal blend may be any coal blend suitable for producing coke. A coal blend suitable for producing coke refers to a coal blend that can produce high-strength coke when dry-distilling is carried out with only the coal blend as a raw material. Whether or not a coal blend is suitable for producing coke can be predicted from the Ro and MF values of the coal blend. A coal blend containing caking coal is an example of a coal blend suitable for producing coke.

A proportion of coal particles having a particle size of 3.0 mm or less in the coal blend for coke production is preferably 70 mass% or more and 100 mass% or less. When the particle size of the coal blend is coarse, a property distribution occurs in coke production using a mixture of components of coal and the like having different properties. The proportion of the coal blend having a particle size of 3.0 mm or less is therefore preferably 70 mass% or more. The proportion of the coal blend having a particle size of 3.0 mm or less is more preferably 75 mass% or more. On the other hand, when the particle size is too fine, bulk density of the coal blend charged into the coke oven decreases, which may cause a decrease in coke strength. The proportion having a particle size of 3.0 mm or less is therefore preferably 90 mass% or less. The proportion having a particle size of 3.0 mm or less is more preferably 85 mass% or less.

In a mixture obtained by blending biomass in a defined proportion with a coal blend for coke production, when the proportion of the biomass in the mixture is 1.0 mass% or more, a significant effect in decreasing carbon dioxide emissions can be obtained, and when 10 mass% or less, the strength of the obtained coke is not remarkably decreased. Accordingly, the proportion of the biomass is preferably 1.0 mass% or more. The proportion of the biomass is preferably 10 mass% or less. The proportion of the biomass is more preferably 2.0 mass% or more. The proportion of the biomass is more preferably 7.0 mass% or less.

In the method of producing coke according to the present disclosure, the mixture obtained by blending the coal blend and the biomass in a defined proportion may be sufficiently mixed without carrying out any operation specifically designed for mixing. Specific examples of such cases include a case where a mixture transported by a belt conveyor falls onto the next belt conveyor, a case where a coal blend and biomass are blended and then ground using grinding apparatus, and a case where a coal blend and biomass are blended and then moisture content is adjusted while agitating using coal moisture control apparatus. In such cases, the apparatus and costs required for mixing can be reduced, which is preferable.

In the mixture, the coal blend and the biomass are preferably mixed uniformly. This can help prevent the problem of biomass that does not soften or melt when heated being unevenly locally concentrated and remaining unsolidified even after the dry distillation process. When the mixing is insufficient, a coal mixer may be used to mix the coal blend with the biomass. As the coal mixer, for example, a mixer that mainly carries out convective mixing, a mixer that mainly carries out shear mixing, a mixer that carries out a combination of convective mixing and shear mixing, or the like may be used. Here, convective mixing refers to mixing that is primarily caused by convection and diffusion of the sample, and shear mixing refers to mixing that involves shearing, collision, grinding, and the like of the sample.

### [Dry distillation]

In the method of producing coke according to the present embodiment, coke is produced by dry-distilling a mixture obtained by blending biomass in a defined proportion with a coal blend for coke production. The mixture is charged into a coke oven and heated in an atmosphere from which air is excluded to be dry-distilled.

When the dry distillation temperature is 900 °C or higher, coke having sufficient strength is obtainable. A temperature of 950 °C or higher is more preferable. On the other hand, when the dry distillation temperature exceeds 1250 °C, a huge amount of energy is required for heating, and the coke may thermally decompose, resulting in a decrease in strength. The dry distillation temperature is therefore preferably 1250 °C or lower. The dry distillation temperature is more preferably 1100 °C or lower. Hereinafter "dry distillation temperature" refers to a maximum arrival temperature of the mixture during dry distillation.

### [Micro-strength index]

In the method of producing coke according to the present embodiment, coke for testing obtained by dry-distilling biomass alone is ground, and the resulting granular material is sorted into granular material that passes through a sieve having an aperture size of 1.18 mm but does not pass through a sieve having an aperture size of 0.60 mm. In a mass particle size distribution when the sorted granular material is subjected to impacts, the micro-strength index, which is a mass percentage of granular material that does not pass through a sieve having an aperture size of 0.21 mm, is 45 or more. The micro-strength index thus determined may be represented by a sign MSI_{0.21}.

According to the present embodiment, a small amount of coke for testing for evaluating the micro-strength index is prepared separately from the mixture for producing coke. The coke for testing can be obtained by dry-distilling the biomass to be evaluated alone. The biomass used to prepare the coke for testing is the same as the biomass used to produce the coke in terms of the type of raw material and the heat treatment conditions. Preferably, the coke for testing is obtained by separately dry-distilling a small sample taken from the biomass to be used for coke production. The coke for testing is a sample corresponding to the biomass-derived portion in the coke produced by dry distillation of the mixture. When preparing coke for testing, the maximum arrival temperature in the dry distillation conditions has a large effect on the strength of the coke. Therefore, the maximum arrival temperature when producing coke for testing by dry-distilling the biomass is preferably approximately the same as the dry distillation temperature during coke production, and is preferably 900 °C or higher. The maximum arrival temperature is preferably 1250 °C or lower.

In a preferred embodiment, the temperature at which the coke for testing is dry-distilled is 1000 °C. Dry distillation at 1000 °C allows the coke for testing to be carbonized sufficiently, making it suitable as a sample for evaluating the micro-strength index. As an example of typical dry distillation conditions other than temperature, biomass is loaded into a crucible, and then the crucible is placed in a heating furnace and heated in a nitrogen atmosphere while controlling the temperature increase rate to 3 °C per minute until the sample temperature reaches 1000 °C. The sample is then maintained at a temperature of 1000 °C for 60 minutes to allow carbonization to proceed. Thereafter, the product is naturally cooled in the furnace while still in the nitrogen atmosphere.

Hereinafter, the micro-strength index (MSI_{0.21}) is a value measured by the following measurement procedure. The coke for testing after dry distillation is ground and sorted into granular material that passes through a sieve having an aperture size of 1.18 mm but does not pass through a sieve having an aperture size of 0.60 mm. 2.0 g of the coke for testing sample obtained by sorting and 12 steel balls each having a diameter of 10.5 mm are placed in a cylindrical container that has a diameter of 26 mm and a length of 305 mm, and the cylindrical container is sealed. The coke for testing sample is subjected to impacts by rotating the cylindrical container 800 times at 25 rpm. After the test, the sample is removed from the cylindrical container, and the weight of granular material that does not pass through a sieve having an aperture of 0.21 mm is determined. A mass percentage obtained by dividing this weight by the weight of the coke for testing sample used in the test is used as the micro-strength index (MSI_{0.21}) according to the present embodiment.

FIG. 1 is a schematic diagram illustrating an example of a test device for applying impacts to the coke for testing. The test device 1 includes a container 2 that is a steel cylinder and a motor 3 and a gear 4 for rotating the container 2. The container 2 that is cylindrical has an axis of rotation that is central along the longitudinal direction of the cylinder. The axis of rotation is arranged so as to be perpendicular to a center line of the container 2, and the direction of the axis of rotation is fixed along the horizontal direction. By rotating the motor 3, the container 2 rotates around the axis of rotation like an airplane propeller. The coke for testing is subjected to impacts inside the container by falling steel balls as the container rotates.

The coke for testing can be ground by grinding with a grinder or by other known means. The purpose of adjusting the particle size by grinding and sorting is to eliminate the influence on the measurement values of the micro-strength index due to macro defects such as cracks and large pores of several mm in size that are in the coke for testing before grinding. During the process of grinding the coke for testing, cracks, large pores, and the like become initiation points of breakage and the grinding progresses, so by measuring the micro-strength index using the ground granular material, the influence of macro defects can be eliminated. Accordingly, the micro-strength index measured using the coke for testing after grinding is a good index of the strength of the matrix portion of the coke for testing that is not affected by macro defects, that is, matrix strength. This means that the higher the micro-strength index, the higher the matrix strength of the coke for testing.

According to the present embodiment, the granular material is sorted using a sieve. The "aperture size" of a sieve refers to the size of the gaps in the mesh of the wire mesh. When the particle size (maximum particle size) of the granular material is smaller than the aperture size of the sieve, the granular material passes through the sieve and falls, but when the particle size of the granular material is larger than the aperture size of the sieve, the granular material does not pass through the sieve and remains on top of the sieve. By using two or more sieves having different aperture sizes, the particle size of the granular material can be adjusted to a defined range.

The aperture size of a sieve is sometimes expressed in units called "mesh". Mesh is the number of lines or gaps per inch of wire mesh length. The larger the mesh number, the finer the sieve. Even when the mesh number is the same for a sieve, when the wires making up the wire mesh are thick, the aperture size will be smaller than when the wires are thin. For example, a commercially available sieve having an aperture size of approximately 1.20 mm has a mesh number of 14 mesh, but even among 14 mesh sieves, the aperture size varies slightly depending on the wire thickness. According to the present embodiment, the aperture size is set to a certain range, and therefore commercially available sieves having aperture sizes in this range can be selected and used.

According to the present embodiment, the micro-strength index is 45 or more. The reason why the lower limit of the micro-strength index is set at 45 is that the value of the micro-strength index measured under the same conditions for coke obtained by dry-distilling a coal blend that does not contain biomass is approximately 45. By producing coke using a mixture including biomass having a micro-strength index equal to or greater than that of the coal blend, it is possible to prevent the progression of breaks originating from the biomass-derived portion. This improves the overall strength of the coke. The micro-strength index is preferably 60 or more.

The reason why high-strength coke can be produced by using biomass that satisfies the micro-strength index specified according to the present embodiment is not fully understood, but it is thought to be due to the following reasons. As described above, in coke containing biomass-derived raw material, the matrix strength of the biomass-derived portion is low, and therefore, when stress is applied from the surroundings, this portion may be easily broken. However, the matrix strength of the biomass-derived portion is not always lower than that of the coal blend-derived portion, and the strength of the obtainable coke may or may not decrease depending on the type of the biomass mixed with the coal blend.

As described above, the micro-strength index defined according to the present embodiment varies depending on the biomass type and part used. According to the present embodiment, in the mass particle size distribution of the biomass after impacts are applied, only biomass having a micro-strength index of 45 or more, which is the mass percentage of granular material that does not pass through a sieve having an aperture size of 0.21 mm, is selected, and only the selected biomass is used in the mixing process and the dry distillation process. Alternatively, the type and part of the biomass used, as well as production conditions, may be adjusted so that the micro-strength index is 45 or more. By using the biomass that satisfies these conditions, it is possible to produce coke having high strength.

### [Volatile content]

According to a preferred embodiment, the volatile content of the biomass on a dry basis is 6.0 mass% or more. According to the present embodiment, the analysis of the volatile content of the biomass is carried out in accordance with the method specified in Japanese Industrial Standards M 8812:2004 "Coal and coke - Methods for proximate analysis". By using the volatile content on a dry basis, the volatile content can be appropriately managed even when moisture subsequently adheres to the biomass.

According to this preferred embodiment, the volatile content of the biomass is analyzed, and only biomass having a volatile content of 6.0 mass% or more is selected, and only the selected biomass is used in the mixing process and the dry distillation process. Alternatively, the conditions of the heat treatment in a carbonization process may be adjusted so that the volatile content is 6.0 mass% or more. By using the biomass that has a volatile content of 6.0 mass% or more, it is possible to produce coke having high strength. According to a more preferred embodiment, the volatile content of the biomass on a dry basis is 7.0 mass% or more. According to an even more preferred embodiment, the volatile content of the biomass on a dry basis is 10 mass% or more.

The reason why high-strength coke can be produced by using the biomass having a volatile content of 6.0 mass% or more is not fully understood, but it is thought to be due to the following reasons. In the process of producing coke by dry-distilling coal, the coal softens and melts at temperatures of 300 °C or higher and adheres to itself, and then solidifies again at temperatures of 500 °C or more, becoming a solid whole. When then heated to 1000 °C, the coal shrinks as the volatile matter contained in the coal is released. In this process, it is believed that the more volatile matter contained in the coal, the greater the amount of shrinkage of the coal due to the release of volatile matter. Similarly, it is believed that the more volatile matter contained in the biomass, the greater the amount of shrinkage of the biomass due to the release of volatile matter.

When the volatile matter contained in the biomass is less than 6.0 mass%, the biomass-derived portion hardly shrinks, and the surrounding coal blend-derived portion shrinks, which is thought to result in stress being applied to the biomass-derived portion, causing it to break. According to a preferred embodiment, the volatile content of the biomass is 6.0 mass% or more, and therefore the biomass-derived portion and the surrounding coal blend-derived portion shrink to the same extent. This is thought to suppress breakage of the biomass-derived portion and increase the strength of the coke.

The higher the heat treatment temperature of the biomass, the less volatile matter is contained in the biomass. This is thought to be because the higher the heat treatment temperature of the biomass, the more volatile matter is released from the biomass. Therefore, when the volatile content measured for the biomass is less than 6.0 mass%, the heat treatment temperature of the biomass may be changed to a lower temperature, or the biomass need not be heat-treated at all, so that the volatile content of the biomass is adjusted to 6.0 mass% or more. The volatile content can be adjusted by changing the heat treatment temperature, the heat treatment time, the type of the biomass used, and the like. Of these means, the means for changing the temperature of the heat treatment is preferable due to ease of control.

According to a preferred embodiment, the lower limit of the volatile content of the biomass on a dry basis is 6.0 mass% or more, but there is no particular upper limit. However, the volatile content of the biomass that is not subjected to any heat treatment is approximately 75 mass%, and taking this into consideration, it is preferable that the volatile content does not exceed 80 mass%.

As explained above, according to a preferred embodiment, by using the biomass having the volatile content in a defined range, coke that has higher strength can be produced. The conditions for heat treatment to achieve a volatile content of 6.0 mass% or more vary depending on the type of the biomass used, but in most cases the volatile content can be adjusted to 6.0 mass% or more by carrying out heat treatment at a temperature of approximately 700 °C or lower.

### [Strength evaluation]

The effects of the present disclosure can be confirmed by evaluating the strength of the coke obtained by the method of producing coke according to the present embodiment. There are various methods for evaluating the strength of coke. Among them, the method of evaluating tumble strength of coke by the drum method specified in Japanese Industrial Standard K 2151:2004 "Coke - Testing methods" is preferable because it is a test that simulates the generation of dust from coke, which is a problem when used in a blast furnace, and is currently the most widely used method in Japan. The drum method is a method in which a sample is inserted into a specified drum testing machine, rotated at a specified speed for a specified number of revolutions, and then sieved through a defined sieve to determine the mass of each category, and the summed percentage (%) of the mass relative to the sample is expressed as the drum strength index (symbol: DI).

As described later, in the EXAMPLES section of this description, the rotation speed of the drum was set to 150 rpm, and the drum strength index (%) was defined as the proportion of the mass of coke that did not pass through a sieve having an aperture size of 15 mm after rotation to the mass of coke inserted into the drum testing machine. The drum strength index indicates the mass fraction of coke that was not ground to a size of 15 mm or less when rotated in the drum testing machine. A larger DI value indicates a higher coke strength.

### EXAMPLES

The following describes Examples of the present disclosure. Embodiments of the present disclosure are not limited to the following Examples, and embodiments of the present disclosure can be modified as desired without departing from the gist of the present disclosure.

A coal blend having an Ro of 1.0 % and a common logarithm of MF (log(MF/ddpm)) of 2.5 was prepared. The coal blend was ground to produce a coal blend in which the proportion of particles having a particle size of 3.0 mm or less was adjusted to 100 mass%. Two types of biomass were prepared: palm kernel shells and Japanese cedar. A portion of these biomasses were heat-treated in an atmosphere from which air was excluded, by holding the temperature for 30 minutes after the temperature of the biomass reached a target temperature of 400 °C, 500 °C, 600 °C, or 700 °C, to obtain carbonized biomass. Each unheated biomass and carbonized biomass was ground to produce biomass in which the proportion of particles having a particle size of 3.0 mm or less was adjusted to 100 mass%.

The obtained biomass was loaded into a crucible and heated in a nitrogen atmosphere at a controlled temperature rise of 3 °C per minute until reaching 1000 °C, after which the temperature was maintained at 1000 °C for 60 minutes for dry distillation. Thereafter, the biomass was allowed to cool naturally in the furnace while still in the nitrogen atmosphere, to obtain coke for testing. The obtained coke for testing was ground and sorted to obtain a sample that passed through a sieve having an aperture size of 1.18 mm and did not pass through a sieve having an aperture size of 0.60 mm. The micro-strength index (MSI_{0.21}) of the coke for testing having the sorted pre-test particle size was measured. The volatile content on a dry basis was also measured for the same biomass. The measured values are listed in Table 1.

### [Table 1]

**Table 1**

| | Raw material | | | | Blend proportion (%) |
|---|---|---|---|---|---|
| | Type | Heat treatment temperature (°C) | Micro-strength index | Volatile content (%) | |
| Example 1 | Palm kernel shells | - | 63.2 | 74.6 | 2.0 |
| Example 2 | Palm kernel shells | - | 63.2 | 74.6 | 5.0 |
| Example 3 | Palm kernel shells | 400 | 62.7 | 21.6 | 2.0 |
| Example 4 | Palm kernel shells | 400 | 62.7 | 21.6 | 5.0 |
| Example 5 | Palm kernel shells | 500 | 62.8 | 19.8 | 2.0 |
| Example 6 | Palm kernel shells | 500 | 62.8 | 19.8 | 5.0 |
| Example 7 | Palm kernel shells | 500 | 62.8 | 19.8 | 7.0 |
| Example 8 | Palm kernel shells | 600 | 63.4 | 11.2 | 2.0 |
| Example 9 | Palm kernel shells | 700 | 60.2 | 6.0 | 2.0 |
| Comparative Example 1 | Japanese cedar | 500 | 13.8 | 21.0 | 5.0 |
| Comparative Example 2 | Japanese cedar | 700 | 14.6 | 6.7 | 2.0 |
| Comparative Example 3 | Japanese cedar | 700 | 14.6 | 6.7 | 5.0 |
| Reference Example | 100 % coal blend (no biomass mixed) | | | | |

| | | | | | |
|---|---|---|---|---|---|
| Underlining indicates value outside scope of present disclosure. | | | | | |

According to the measurement results, when the biomass was palm kernel shells, the micro-strength index was 60.2 or more and 63.4 or less, regardless of whether heat treatment was carried out or not and regardless of the temperature of heat treatment. These values were greater than the micro-strength index value of 45 for the coal blend. Further, the value of volatile content was 74.6 % for palm kernel shells that were not heat-treated, and decreased as the heat treatment temperature increased. When the heat treatment temperature was 700 °C, the volatile content was 6.0 %. On the other hand, when the biomass was Japanese cedar, the micro-strength index indicated low values of 13.8 or more and 14.6 or less, regardless of the heat treatment temperature. When the heat treatment temperature was 700 °C, the volatile content was 6.7 %.

Next, the coal blend and the biomass were blended so that the biomass blend proportion in the mixture was 2.0 %, 5.0 %, or 7.0 %, and the moisture content was adjusted to 8.0 mass%, and 16 kg of each mixture was prepared for each type of biomass. This mixture was loaded into a stainless steel container, which was then placed in an electric furnace through which nitrogen gas was circulated, where heating and dry distillation was carried out. The bulk density of the mixture in the container was 775 kg/m³ on a dry basis. The container loaded with the mixture was charged into an electric furnace set at a furnace wall temperature of 1050 °C, and the furnace wall temperature was maintained for 6 hours from charging to carry out dry distillation. The container was then transferred to a cooling apparatus through which nitrogen gas at room temperature was circulated to carry out cooling, obtaining coke containing biomass as a raw material. Further, in order to compare the drum strength index, a Reference Example of only the coal blend was dry-distilled under the same conditions to obtain a coke made of 100 % coal blend that did not contain biomass as a raw material. Next, the drum strength index (DI) of the obtained coke was measured under the conditions of a drum rotation speed of 150 rpm and a sieve aperture size of 15 mm. The measured values are listed in Table 2.

### [Table 2]

**Table 2**

| | DI (%) |
|---|---|
| Example 1 | 79.3 |
| Example 2 | 78.1 |
| Example 3 | 79.0 |
| Example 4 | 78.7 |
| Example 5 | 79.3 |
| Example 6 | 78.4 |
| Example 7 | 78.0 |
| Example 8 | 78.6 |
| Example 9 | 77.3 |
| Comparative Example 1 | 76.8 |
| Comparative Example 2 | 76.5 |
| Comparative Example 3 | 64.1 |
| Reference Example | 79.2 |

According to Tables 1 and 2, the cokes of Examples 1 to 9, which were mixed with biomass having a micro-strength index of 45 or more, all indicated a DI value of 77 or more. Such DI values mean that the strength of the coke is strong enough to withstand use in a blast furnace. Further, the cokes of Examples 1 to 8, each having a volatile content of 7.0 mass% or more, all indicated a DI value of 78 or more. These cokes have DI values closer to that of the Reference Example coal blend and have particularly good strength. In contrast, the cokes according to Comparative Examples 1 to 3, which indicated low values for the micro-strength index, indicated large decreases in the drum strength index. Therefore, it can be seen that the method of producing coke according to the present disclosure can produce coke having higher strength, based on more reliable predictions than conventional technology.

### INDUSTRIAL APPLICABILITY

According to the method of producing coke of the present disclosure, it is possible to produce coke having high strength that can withstand use in a blast furnace, even when a portion of the coal that is a raw material for the coke is replaced with biomass-derived raw material.

### REFERENCE SIGNS LIST

- 1: test device
- 2: container
- 3: motor
- 4: gear

## Claims

1. A method of producing coke, the method comprising:
blending biomass in a defined proportion with a coal blend for coke production to form a mixture, and dry-distilling the mixture to produce coke, wherein
a micro-strength index of coke for testing obtained by dry-distilling the biomass alone is 45 or more.

2. The method of producing coke according to claim 1, wherein the micro-strength index is 60 or more.

3. The method of producing coke according to claim 1 or 2, wherein a temperature at which the coke for testing is dry-distilled is 1000 °C.

4. The method of producing coke according to any one of claims 1 to 3, wherein volatile content of the biomass on a dry basis is 6.0 mass% or more.

5. The method of producing coke according to any one of claims 1 to 4, wherein the biomass includes at least one of palm kernel shells or woody biomass.

6. The method of producing coke according to any one of claims 1 to 5, wherein the biomass is carbonized biomass obtained by heat-treating unheated biomass.

7. The method of producing coke according to any one of claims 1 to 6, wherein a proportion of the biomass in the mixture is 1.0 mass% or more and 10 mass% or less.

8. The method of producing coke according to any one of, claims 1 to 7, wherein a proportion of the biomass having a particle size of 3.0 mm or less in the biomass is 70 mass% or more, and a proportion of the coal blend having a particle size of 3.0 mm or less in the coal blend is 70 mass% or more.
